# EUROPÄISCHE PATENTANMELDUNG

(11) **EP 4 299 359 A1**
(43) Veröffentlichungstag der Anmeldung: **03.01.2024**
(21) Anmeldenummer: 23173413.8
(22) Anmeldetag: 15.05.2023
(51) Int. Cl.: B60L 15/00, B60L 15/32, B60L 50/51, B60L 50/52, B61C 3/00, H02M 5/458, H02P 27/06

(54) **ELEKTRISCHES ANTRIEBSSYSTEM**

(30) Priorität: 30.06.2022 DE 102022206679
(71) Anmelder: Siemens Mobility GmbH, 81739 München (DE)
(72) Erfinder: Adam, Christoph, 90411 Nürnberg (DE); Corduan, Matthias, 90439 Nürnberg (DE); Körner, Olaf, 90469 Nürnberg (DE)
(74) Vertreter: Siemens Patent Attorneys

(57) **Zusammenfassung**

Die vorliegende Erfindung betrifft ein elektrisches Antriebssystem (6) für ein Schienenfahrzeug, aufweisend eine Mehrzahl an Antriebsmotoren, wobei das Antriebssystem (6) wenigstens einen permanenterregten Motor (7c, 7d) und wenigstens einen weiteren Motor (7a, 7b) ausgewählt aus der Gruppe bestehend aus Asynchronmotor und Reluktanzmotor als Antriebsmotor umfasst, dadurch gekennzeichnet, dass der permanenterregte Motor (7c, 7d) von einem Inverter (8c, 8d) versorgt wird, dessen Leistungshalbleiter einen größeren Bandabstand als Silizium aufweist, und der weitere Motor (7a, 7b) ausgewählt aus der Gruppe bestehend aus Asynchronmotor und Reluktanzmotor von einem Si-Inverter (8a, 8b)versorgt wird.

## Beschreibung

Die vorliegende Erfindung betrifft ein elektrisches Antriebssystem. Die vorliegende Erfindung betrifft insbesondere ein elektrisches Antriebssystem, welches auf vorteilhafte Weise unterschiedliche elektrische Maschinen für einen Antrieb verwendet.

Elektrische Maschinen sind als Generatoren und/oder elektrische Motoren weit bekannt. Die Vorteile von Permanentmagnet-Synchronmotoren (PSM) liegen dabei in den vergleichsweise geringen Rotorverlusten und damit besseren Wirkungsgraden im Vergleich etwa zur Asynchronmaschine. Weiterhin können Permanentmagnet-Synchronmotoren auch höherpolig als die Asynchronmaschine gebaut werden, ohne den Leistungsfaktor negativ zu beeinflussen. Die Höherpoligkeit der Permanentmagnet-Synchronmotoren führt zu besseren Drehmoment- und Leistungsdichten bei gegebenen Bauräumen und ermöglicht auch die Realisierung von getriebelosen Antrieben. Darüber hinaus sind Asynchronmotoren und Reluktanzmotoren bekannt, welche bei der Leistungsentfaltung weniger effektiv sind, jedoch insbesondere im Teillastbetrieb oder bei lastlosen Rollphasen geringe Verluste zeigen.

EP 3 564 088 A1 beschreibt ein Antriebssystem für ein Schienenfahrzeug mit einer Mehrzahl an Antriebsmotoren. Bei diesem Antriebssystem ist es vorgesehen, dass es wenigstens einen permanentmagneterregten Motor und wenigstens einen Asynchronmotor und/oder wenigstens einen Reluktanzmotor als Antriebsmotoren aufweist.

Derartige Lösungen weisen jedoch noch weiteres Verbesserungspotential auf.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche der Energieverbrauch eines elektrischen Antriebssystems weiter verbessert werden kann.

Die Lösung der Aufgabe erfolgt erfindungsgemäß zumindest zum Teil durch ein elektrisches Antriebssystem mit den Merkmalen des Anspruchs 1. Die Lösung der Aufgabe erfolgt erfindungsgemäß ferner zumindest zum Teil durch einen Antriebsstrang mit den Merkmalen des Anspruchs 9 sowie durch ein Fahrzeug mit den Merkmalen des Anspruchs 10. Weiterhin erfolgt die Lösung der Aufgabe durch ein Verfahren mit den Merkmalen des Anspruchs 12. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein elektrisches Antriebssystem für ein Schienenfahrzeug, aufweisend eine Mehrzahl an Antriebsmotoren, wobei das Antriebssystem wenigstens einen permanenterregten Motor und wenigstens einen weiteren Motor ausgewählt aus der Gruppe bestehend aus Asynchronmotor und Reluktanzmotor als Antriebsmotor umfasst, wobei der permanenterregte Motor von einem Inverter versorgt wird, dessen Leistungshalbleiter einen größeren Bandabstand als Silizium aufweist, und der weitere Motor ausgewählt aus der Gruppe bestehend aus Asynchronmotor und Reluktanzmotor von einem Si-Inverter versorgt wird.

Eine derartige Ausgestaltung erlaubt auf besonders vorteilhafte Weise eine Energieeinsparung bei dem Betrieb eines Antriebsstrangs, insbesondere für Bahnfahrzeuge, welche auch als Schienenfahrzeuge bezeichnet werden können.

Bei dem Betrieb von Schienenfahrzeugen, insbesondere bei Nahverkehrs- und Regionalverkehrszügen, untergliedert man Bewegungsphasen zwischen zwei Stationen in vier Bewegungsabschnitte: Beschleunigung, Beharrung, Rollen/ Auslauf und Bremsung.

Der Beschleunigungsbereich ist von einer Antriebsleistung des Schienenfahrzeugs und einer Übertragung der Antriebskräfte auf die Räder des Schienenfahrzeugs geprägt. Solange eine Zugkraft des Antriebs des Schienenfahrzeugs größer ist als ein ihm entgegengebrachter Fahrwiderstand, beschleunigt das Schienenfahrzeug.

Der Beharrungsabschnitt wird erreicht, wenn sich Zugkraft und Fahrwiderstand beziehungsweise Fahrwiderstandskraft mit entgegengesetzten Vorzeichen entsprechen.

In einer Rollphase bzw. in dem Auslaufabschnitt wird die Zugkraft soweit zurückgenommen, dass das Schienenfahrzeug aufgrund des Fahrwiderstands seine Fahrgeschwindigkeit verringert. Werden zusätzlich Bremskräfte eingesetzt, so geht der Auslaufabschnitt in den Abschnitt der Bremsung über.

Das Zusammenspiel der zuvor genannten Abschnitte bzw. Phasen einer Fahrt des Schienenfahrzeugs wird auch als Fahrspiel bezeichnet.

In den Fahrspielen zwischen den einzelnen Stationen kommt es in den Phasen der Beharrung, des Rollens/Auslaufs und der mechanischen Bremsung für den oder die Antriebsmotoren zu einem Teillastbetrieb oder sogar zu antriebslosen Rollphasen. Dabei erfolgt ein Betrieb mit beispielsweise 0 bis 50 Prozentpunkten der fahrzeugseitig installierten Gesamtantriebsleistung über einen verhältnismäßig großen Zeitanteil der Gesamtfahrdauer zwischen zwei Stationen. Aus den Stationen heraus wird aber in der Phase der Beschleunigung eine hohe Zugkraft und Antriebsleistung benötigt, oft auch im regenerativen Bremsen. Diese hohe Zugkraft und Antriebsleistung bestimmen die Gesamtzahl an angetriebenen Radsätzen und der installierten (Kurzzeit-)Antriebsleistung. Diese hohe Antriebsleistung wird aber während der übrigen Phasen der Fahrspiele bis auf etwaiges regeneratives Bremsen nicht mehr benötigt.

Bei der Verwendung von Asynchronmaschinen als Antriebsmotoren können mittels Taktsperren einzelner Stromrichter, die die Motoren mit elektrischer Leistung versorgen, einzelne Antriebsmotoren und damit angetriebene Radsätze abgeschaltet werden. In den abgeschalteten Asynchronmaschinen treten dabei keine elektromagnetischen Verluste mehr auf. Die Stromrichtertaktsperre vermeidet dabei auch Verluste in den verwendeten Leistungshalbleitern (Schalt- und Durchlassverluste) im Teillastbetrieb. Die verbliebenen aktive Antriebsmotoren werden nahe einem Volllastpunkt betrieben, wodurch sich höhere Wirkungsgrade erzielen lassen.

Eine Taktsperre ist bei permanenterregten Motoren nicht beziehungsweise nur bis zu einer bestimmten zulässigen Spannung möglich oder führt zumindest nicht zu einer elektromagnetisch verlustlosen Maschine, da der rotierende Permanentmagnetfluss weiterhin Wirbelstrom- und Hystereseverluste in dem in der Maschine verwendeten Eisenkern hervorruft.

Aus genannten Gründen ergibt ein Vergleich des Energieverbrauchs zwischen Asynchronmaschinen und permanenterregten Motoren in Fahrspielen mit langen Roll- oder Auslaufphasen, dass die permanenterregten Motoren keine Energieeinsparung erzielen können oder sogar eine schlechtere Energiebilanz erzielen.

Bei einem Teillastbetrieb des anzutreibenden Schienenfahrzeugs kann das Antriebssystem vorteilhafterweise die in diesem Lastbereich verlustbehafteteren Asynchron- und/oder Reluktanzmotoren abschalten. Die Permanentmagneterregung erlaubt im Gegensatz zu dem Asynchronmotor oder dem Reluktanzmotor auch in geringeren Leistungsbereichen hohe Wirkungsgrade und Leistungsfaktoren oder kann mit einer hohen Last betrieben werden, je nach Anteil der Maschinentypen und der erforderlichen Gesamtantriebsleistung.

Durch die Kombination aus permanentmagneterregten Motoren mit Asynchronmotoren und/oder Reluktanzmotoren als Antriebsmotoren lassen sich für Spitzenlastbereiche während der Beschleunigungsphase die Asynchronmotoren und/oder Reluktanzmotoren zusätzlich zu den permanentmagneterregten Motoren zuschalten, um eine maximale Zugkraft und Antriebsleistung zu ermöglichen.

Die Erfindung ermöglicht es daher, die Vorteile von permanentmagneterregten Motoren, also insbesondere hoher Wirkungsgrad auch im Teillastbetrieb, und von Asynchronmotoren und/oder Reluktanzmotoren, nämlich einfache verlustfreie Abschaltbarkeit, zu kombinieren und ein energieverbraucheffizientes Antriebssystem bereitzustellen.

Dabei ist das Antriebssystem entsprechend derart ausgelegt, dass die unterschiedlichen Motoren an einer Radsatzwelle oder einem Einzel-Rad angreifen.

Es ist weiterhin vorgesehen, dass der permanenterregte Motor von einem Inverter versorgt wird, dessen Leistungshalbleiter einen größeren Bandabstand als Silizium aufweist, und dessen Bandabstand daher insbesondere in einem Bereich von ≥ 1,3 eV, beispielsweise ≥ 1,8 eV, bevorzugt ≥ 2,2 eV, liegt. Dies kann beispielsweise problemlos umsetzbar sein durch die Auswahl seiner Bauform, insbesondere durch die Auswahl seines Halbleiters. Beispielsweise kann der Umrichter ein SiC-Umrichter, ein GaN-Umrichter oder ein Diamant-Umrichter sein, welche allesamt den vorbeschriebenen Bandabstand aufweisen.

Dabei ist unter einem SiC-Umrichter im Sinne der Erfindung ein Umrichter zu verstehen, der einen Siliziumcarbid-Leistungshalbleiter aufweist und weitere genannte Umrichter sind ebenfalls entsprechend ihres Halbleitermaterials benannt. Ferner wird der weitere Motor ausgewählt aus der Gruppe bestehend aus Asynchronmotor und Reluktanzmotor von einem Si-Inverter versorgt.

Der Aufbau von Invertern beziehungsweise Pulswechselrichtern ist dem Fachmann im Prinzip bekannt. Ein Inverter erzeugt aus der von einem Gleichstromnetz in Verbindung mit einem optionalen DCDC-Steller oder einem Transformator und Eingangs-Gleichrichter (4QS) oder einer HV-Batterie oder Brennstoffzelle bereitgestellten Gleichspannung eine meist dreiphasige Wechselspannung (Drehspannung) zum Betrieb einer E-Maschine.

Der niedrige Lastbereich im Fahrbetrieb wird über den hocheffizienten permanenterregten Motor vorzugsweise durch einen SiC-Inverter gespeist abgedeckt. Dadurch verringert sich die zum Erreichen der Reichweitenanforderung benötigte Batteriekapazität. Es kann im Fahrzeug eine Batterie geringerer Kapazität eingesetzt werden, was zu Einsparungen führt. Die geringere Batteriekapazität ermöglicht zudem eine prozentuale Verringerung der Ladezeit. Die Gesamtleistung des Antriebssystems bleibt gleich, da der SiC-Inverter, beispielsweise, durch den Si-Inverter ergänzt wird. Das Fahrzeug zeigt die gleiche Performance wie ein Fahrzeug mit Invertern mit gleichen Halbleitermaterialien.

Grundsätzlich kann es erreicht werden, da der permanenterregte Motor mit größerem Zeitanteil und höheren Grundfrequenzen betrieben wird, da er höherpolig im Vergleich zur Asynchronmaschine oder Reluktanzmaschine ist, dass der SiC-Leistungshalbleiter, beispielsweise, mit niedrigeren Schaltverlusten optimal genutzt werden kann.

Die vorliegende Erfindung ermöglicht es daher, den Energieverbrauch von Bahnfahrzeugen zu senken. Für den Energieverbrauch eines Nahverkehrsfahrzeugs, wie etwa einer Metro oder Commuter Rail, ist es entscheidend, dass das Antriebssystem auch in lastlosten Rollphasen oder Teillastbereichen möglichst kleine Verluste verursacht. Dies ist wie vorstehend beschrieben durch die Kombination von permanenterregtem Motor und ferner Asynchronmotor und/ Reluktanzmotor gegeben.

Im gesamten Antriebsstrang aufweisend das erfindungsgemäße Antriebssystem sind die Verluste in den elektrischen Maschinen (etwa ASM oder PSM) bezogen auf ein reales Fahrspiel dominant gegenüber den Verlusten der anderen Antriebskomponenten, wie Transformator, Stromrichter oder Getriebe. Daher haben Optimierungen in den elektrischen Maschinen und deren Betriebsführung, welche nicht die Auswahl und die Verluste der anderen Komponenten nennenswert tangieren, einen großen Einfluss auf den Wirkungsgrad des Gesamtsystems.

Um den Energieverbrauch über den gesamten Fahrzyklus zu optimieren, etwa hinsichtlich der maschinennahen Optimierungsparameter wie etwa Pulsmuster, Pulsfrequenz, Zwischenkreisspannung usw., wurde erfindungsgemäß eine Möglichkeit gefunden, welche die Vorteile der jeweiligen Maschinentypen verstärkt und die Nachteile dämpft. Dadurch werden die Verluste in Teillastphasen und Rollphasen eines Antriebssystems mit unterschiedlichen Maschinentypen, insbesondere permanenterregter Motor, Asynchronmotor und Reluktanzmotor, und unterschiedlichen Leistungshalbleiter in den Pulswechselrichtern, insbesondere Silizium und SiliziumCarbid, minimiert. Dies kann erfindungsgemäß in besonders effektiver Weise ermöglicht werden durch Auswahl der elektrischen Maschinen insbesondere in Kombination mit den spezifisch verwendeten Halbleitern.

Bevorzugt kann die Leistungsverteilung der Antriebsmotoren in Abhängigkeit von wenigstens einem zu erwartenden Streckenparameter, Umgebungsparameter oder Betriebsparameter einstellbar sein. Dies kann insbesondere durch ein Steuergerät des Antriebssystems möglich sein. Diese Ausgestaltung erlaubt eine besonders effektive Energiereduzierung, da nicht eine voreingestellte Verteilung der Leistungsabgabe streckenunabhängig vorliegt, sondern letztere abhängig ist von wenigstens einem, beispielsweise von verschiedensten Streckenparametern, Umgebungsparameter oder Betriebsparametern. Somit kann in Abhängigkeit der beschriebenen Parameter eine Leistungsaufteilung auf die unterschiedlichen elektrischen Maschinen, also eine gleichmäßige Leistungsbereitstellung oder auch eine definierte ungleiche Steuerung insbesondere im Teillastbetrieb, ermöglicht werden. Es erfolgt somit eine Anpassung an die real herrschenden Bedingungen, was eine Energieeinsparung besonders effektiv macht, da die Streckenparameter wiederum das Fahrspiel beeinflussen beziehungsweise bestimmen.

Denkbar wären auch Lern-Algorithmen etwa mittels AI, also mittels künstlicher Intelligenz, zum stetigen Optimieren der Betriebsführung im Betrieb des Fahrzeugs.

Insbesondere wird somit nicht bloß unterschieden, in welcher Phase des Fahrspiels sich das Fahrzeug momentan befindet, sondern es werden ferner weitere Parameter beachtet, welche sich ebenfalls auf die Leistungsanforderung auswirken, jedoch eben über die bloße Phase des Fahrspiels hinausgehen.

Hinsichtlich der Strecken-, Betriebs- und Umgebungsparameter kann es besonders vorteilhaft sein, dass diese ausgewählt sind aus Höhenprofil der Strecke, Anteil der einzelnen Bewegungsphasen des Fahrspiels, erwartete Belastung durch Gewicht des Fahrzeugs, Umgebungs- und Umweltbedingungen wie Witterung (Schienenverhältnisse) und Umgebungstemperaturen, Einhaltung des Fahrplans. Insbesondere derartige Streckenparameter wirken sich aus auf die jeweilige Leistungsanforderung der elektrischen Maschinen und kann daher wichtig sein, um eine effektive Energieeinsparung zu ermöglichen.

Es kann weiterhin von Vorteil sein, dass die von dem permanenterregten Motor im Volllastbetrieb gelieferte Leistung in einem Leistungsbereich liegt, der von 100% bis 150%, beispielsweise von größer oder gleich 100 % bis 130 %, etwa von 110 % bis 130 % bezüglich der Leistung liegt, die von dem weiteren Motor ausgewählt aus der Gruppe bestehend aus Asynchronmotor und Reluktanzmotor geliefert wird. In anderen Worten kann die Leistung des permanenterregten Motors insbesondere kurzzeitig gegenüber dem Asynchronmotor und/oder Reluktanzmotor erhöht werden. Dies kann beispielsweise bei geringen Außentemperaturen oder bei geringer Zeitdauer möglich sein, da insbesondere die so entstehende thermische Belastung zu keinen Beschädigungen führt, aber dennoch bei vergleichsweise geringem Energieeinsatz eine hohe Leistung ermöglichen kann. Dies kann wiederum insbesondere durch ein Steuergerät des Antriebssystems möglich sein.

Hierzu ist eine Anpassung der Dimensionierung des Antriebssystems, insbesondere auch der Pulswechselrichter, für die vorgeschlagene veränderte Leistungsaufteilung PSM zu ASM/RSM vorteilhaft. Dies ermöglicht eine bessere Ausnutzung des Halbleiters aufgrund des zusätzlichen Freiheitsgrades und führt damit zur Einsparung von Halbleitern.

Es kann weiterhin von Vorteil sein, dass bei Volllast und insbesondere hohen Zug- und Bremskräften am Rad bei niedrigen Fahrgeschwindigkeiten sämtliche Antriebsmotoren mit einer Unschärfe von 5%, bezogen auf den größten Wert, die gleiche Leistung bereitstellen. In anderen Worten kann im Wesentlichen von allen Motoren die gleiche Zug- und Bremskraft an einer Radsatzwelle oder Einzelrad bereitgestellt werden. Dadurch kann der Verschleiß Rad/Schiene reduziert und ferner bei hoher Leistung eine gute Energiereduzierung ermöglicht werden.

Es kann weiterhin von Vorteil sein, dass der Inverter beziehungsweise Pulswechselrichter (PWR) die weiteren Motoren, falls es sich um Asynchronmotoren handelt, in Gruppenspeisung versorgt. Beispielsweise kann ein Inverter beziehungsweise ein Pulswechselrichter für zwei oder mehr elektrische Asynchron-Maschinen vorgesehen sein. Aufgrund der Auswahl der Halbleiter ist dies problemlos möglich und erlaubt so einen einfachen und kosteneffizienten Aufbau.

Es kann weiterhin bevorzugt sein, dass eine Leistungsaufteilung der permanenterregten Maschine auf der einen Seite und des weiteren Motors ausgewählt aus der Gruppe bestehend aus Asynchronmotor und Reluktanzmotor erfolgt anhand einer vorgegebenen Effizienzmatrix. Eine derartige Effizienzmatrix, insbesondere betrachtend entsprechende Strecken-, Betriebs und Umgebungsparameter, kann beispielsweise unterschiedliche Fahrsituationen beziehungsweise Betriebspunkte beinhalten und jeweils für eine Fahrsituation vorgeben, welche Leistungsaufteilung erfolgen soll. In dieser Ausgestaltung kann somit stets die aktuelle Fahrsituation untersucht und anhand der ermittelten Daten eine entsprechende Leistungsaufteilung realisiert werden. Dadurch liegt auf höchst dynamische Weise stets die optimale Leistungsaufteilung vor, was den Energieverbrauch besonders effektiv zu reduzieren vermag und ferner die umfassten Komponenten besonders effektiv schonen kann.

Hinsichtlich weiterer Vorteile und technischer Merkmale des elektrischen Antriebssystems wird hiermit auf die Beschreibung des Antriebsstrangs, des Fahrzeugs, des Verfahrens, die Figur und die Beschreibung der Figur verwiesen.

Beschrieben wird ferner ein Antriebsstrang für ein Fahrzeug, insbesondere für ein Schienenfahrzeug, wobei der Antriebsstrang ein elektrisches Antriebssystem zum Antreiben zumindest eines Rades oder einer Radsatzwelle umfasst, dadurch gekennzeichnet, dass das Antriebssystem ausgestaltet ist, wie vorstehend beschrieben.

Beispielsweise kann der Antriebsstrang in einem Bahnfahrzeug beziehungsweise Schienenfahrzeug angeordnet sein beziehungsweise Teil des Bahnfahrzeugs sein, so dass eine gute Implementierung in bereits bestehend Systeme sowie eine breite Anwendbarkeit gegeben ist. In diesem Fall kann der Antriebsstrang das vorbeschrieben Antriebssystem, ein mit den Motoren verbundenes Getriebe, eine Radsatzwelle und eine Achskupplung zum Übertragen des Antriebsmomentes vom Getriebe auf die Radsatzwelle umfassen. Denkbar sind jedoch auch getriebelose Motoren, insbesondere eigene sich hier permanenterregte Synchronmotoren (PSM).

Die spezifischen Vorteile eines derartigen Antriebsstrangs können insbesondere darin gesehen werden, dass eine besonders effektive Energieeinsparung und ferner eine bestmögliche Schonung der Komponenten ermöglicht.

Hinsichtlich weiterer Vorteile und technischer Merkmale des Antriebsstrangs wird hiermit auf die Beschreibung des elektrischen Antriebssystems, des Fahrzeugs, des Verfahrens die Figur und die Beschreibung der Figur verwiesen.

Beschrieben wird ferner ein Fahrzeug, wobei das Fahrzeug wenigstens eines von einem elektrischen Antriebssystem und einem Antriebsstrang aufweist, wie diese vorstehend beschrieben sind.

Beispielsweise kann das Fahrzeug ein auch Bahnfahrzeug genanntes Schienenfahrzeug sein, da insbesondere für derartige Fahrzeuge entsprechende Antriebsstränge beziehungsweise elektrische Antriebssysteme geeignet sind.

Die vorstehend beschriebenen Vorteile sind auch für ein beschriebenes Fahrzeug einschlägig, so dass eine besonders effektive Energieeinsparung und ferner eine bestmögliche Schonung der Komponenten ermöglicht werden kann.

Hinsichtlich weiterer Vorteile und technischer Merkmale des Fahrzeugs wird hiermit auf die Beschreibung des elektrischen Antriebssystems, des Antriebsstrangs, des Verfahrens die Figur und die Beschreibung der Figur verwiesen.

Beschrieben wird ferner ein Verfahren zum Betreiben eines elektrischen Antriebssystems aufweisend eine Mehrzahl an Antriebsmotoren, wobei das Antriebssystem wenigstens einen permanenterregten Motor und wenigstens einen weiteren Motor ausgewählt aus der Gruppe bestehend aus Asynchronmotor und Reluktanzmotor als Antriebsmotor umfasst, und wobei die Motoren jeweils von einem Inverter versorgt werden, wobei eine von dem permanenterregten Motor im Vollastbetrieb gelieferte Leistung in einem Leistungsbereich liegt, der von 100% bis 150% bezüglich der Leistung liegt, die von dem weiteren Motor ausgewählt aus der Gruppe bestehend aus Asynchronmotor und Reluktanzmotor geliefert wird.

Hinsichtlich der detaillierten Beschreibung wird auf die vorstehenden Ausführungen verwiesen.

Bevorzugt kann der permanenterregte Motor von einem Inverter mit einem Leistungshalbleiter mit einem größeren Bandabstand als Silizium versorgt werden und kann der weitere Motor, ausgewählt aus der Gruppe bestehend aus Asynchronmotor und Reluktanzmotor, von einem Si-Inverter versorgt werden.

Es ergeben sich zusammenfassend die vorstehend beschrieben Vorteile, wonach eine besonders effektive Energieeinsparung und ferner eine bestmögliche Schonung der Komponenten ermöglicht werden kann.

Weitere Einzelheiten, Merkmale und Vorteile des Gegenstandes der Erfindung ergeben sich aus den Unteransprüchen sowie aus der nachfolgenden Beschreibung der Figur. In der Figur zeigt:

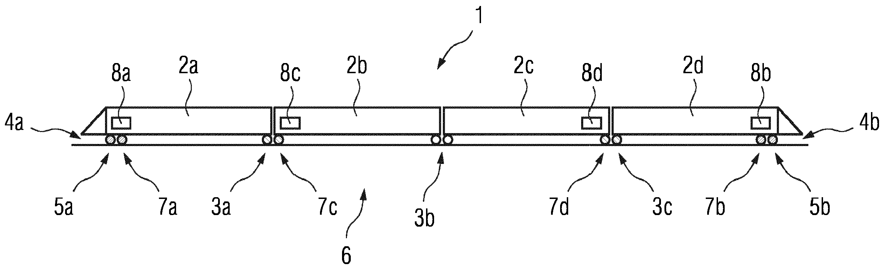

- Fig. 1: einen Gliederzug mit einem elektrischen Antriebssystem gemäß einer Ausgestaltung der vorliegenden Erfindung von der Seite.

Figur 1 zeigt einen erfindungsgemäßen S-Bahn Gliederzug 1 mit vier Zuggliedern 2a, 2b, 2c, 2d. Ein erstes Zugglied 2a und ein in FIG 1 rechts daneben angeordnetes zweites Zugglied 2b stützen sich auf ein erstes gemeinsames Drehgestell 3a ab. Das zweite Zugglied 2b und ein in FIG 1 rechts daneben angeordnetes drittes Zugglied 2c stützen sich auf ein zweites gemeinsames Drehgestell 3b ab. Das dritte Zugglied 2c und ein in FIG 1 rechts daneben angeordnetes viertes Zugglied 2d stützen sich auf ein drittes gemeinsames Drehgestell 3c ab. Die Drehgestelle 3a, 3b, 3c werden auch als Jakobsdrehgestelle bezeichnet.

Das erste Zugglied 2a, in FIG 1 links außen angeordnet, stützt sich an einer ersten Stirnseite 4a des Gliederzugs 1 auf ein erstes separates Drehgestell 5a ab. Das vierte Zugglied 2d (in FIG 1 rechts außen angeordnet) stützt sich an einer zweiten Stirnseite 4b des Gliederzugs 1 auf ein zweites separates Drehgestell 5b ab.

Jedes Drehgestell 3a, 3b, 3c, 5a, 5b umfasst ein Paar Radsätze. Dabei umfasst jeder Radsatz zwei einander gegenüberliegende Räder, die auf einer Schiene (dargestellt) entlang bewegt werden können. Jedes Drehgestell 3a, 3b, 3c, 5a, 5b umfasst demnach vier Räder. Es sind im Rahmen der Erfindung auch Drehgestelle/Fahrwerke 3a, 3b, 3c, 5a, 5b vorsehbar, die jeweils mehr oder weniger Räder bzw. Radsätze aufweisen.

Ein Antriebssystem 6 des Gliederzugs 1 umfasst Asynchronmotoren und/oder Reluktanzmotoren 7a, 7b, die in einem Bereich der beiden separaten Drehgestelle 5a, 5b des ersten bzw. vierten Zugglieds 2a, 2d angeordnet sind und die dazugehörigen Räder antreiben.

Weiterhin umfasst das Antriebssystem 6 des Gliederzugs 1 permanentmagneterregte Motoren 7c, 7d, die in einem Bereich des ersten gemeinsamen Drehgestells 3a zwischen dem ersten Zugglied 2a und dem zweiten Zugglied 2b, und in einem Bereich des dritten gemeinsamen Drehgestells 3c zwischen dem dritten Zugglied 2c und dem vierten Zugglied 2d angeordnet sind. Im zweiten gemeinsamen Drehgestell 3b ist kein Antriebsmotor angeordnet.

Erfindungsgemäß ist es ferner vorgesehen, dass die permanenterregte Motoren 7c, 7d von jeweils einem Inverter 8c, 8d versorgt wird, dessen Halbleiter eine Bandlücke größer als die Bandlücke von Silizium aufweist, beispielsweise welcher eine Bandlücke von ≥ 1,3 eV aufweist, und Asynchronmotoren und/oder Reluktanzmotoren 7a, 7b, von einem Si-Inverter 8a, 8b versorgt werden.

Das beschriebene Antriebssystem eignet sich sinngemäß auch für andere Motorisierungsvarianten und Fahrzeugtypen für Nah- und Fernverkehr, wie zum Beispiel Einzelwagenzüge (zwei meist zweiachsige Fahrwerke pro Wagenkasten), Triebköpfe, vier- und sechsachsige Lokomotiven und Straßenbahnen.

Bei dem Antriebssystem 6 werden die Antriebskomponenten im Sinne ihrer physikalischen Eigenschaften energieeffizient im Fahrspiel mit Volllast-, Teillast- und Rollphasen eingesetzt. Es ergeben sich rechnerisch nachgewiesene Einsparpotentiale im Bereich von 5%-10% bezogen auf die Verluste des gesamten Antriebssystems 6, umfassend Trafo, Eingangs-Gleichrichter (Vierquadrantensteller 4QS), Stromrichter, elektrische Maschinen, Getriebe, im Vgl. zu einem identischen Fahrzeug mit ausschließlich Technik umfassend Asynchronmotoren. Diese optimale Nutzung von Asynchronmotoren/Reluktanzmotoren und permanenterregten Motoren auf einem Fahrzeug nährt sich bei den Gesamtverlusten stark einem Fahrzeug mit ausschließlich der teureren Permanenterregungs-Technik an. Der Abstand beträgt lediglich beispielhafte 0.5-2%. Es handelt sich hierbei um eine fahrspielabhängige Optimierung.

## Patentansprüche

1. Elektrisches Antriebssystem (6) für ein Schienenfahrzeug, aufweisend eine Mehrzahl an Antriebsmotoren, wobei das Antriebssystem (6) wenigstens einen permanenterregten Motor (7c, 7d) und wenigstens einen weiteren Motor (7a, 7b) ausgewählt aus der Gruppe bestehend aus Asynchronmotor und Reluktanzmotor als Antriebsmotor umfasst, **dadurch gekennzeichnet, dass** der permanenterregte Motor (7c, 7d) von einem Inverter (8c, 8d) versorgt wird, dessen Leistungshalbleiter einen größeren Bandabstand als Silizium aufweist, und der weitere Motor (7a, 7b) ausgewählt aus der Gruppe bestehend aus Asynchronmotor und Reluktanzmotor von einem Si-Inverter (8a, 8b)versorgt wird.

2. Elektrisches Antriebssystem (6) nach Anspruch 1, **dadurch gekennzeichnet, dass** die Leistungverteilung der Antriebsmotoren (7a, 7b, 7c, 7d) in Abhängigkeit von wenigstens einem zu erwartenden Streckenparameter, Umgebungsparameter oder Betriebsparameter einstellbar ist.

3. Elektrisches Antriebssystem (6) nach Anspruch 2, **dadurch gekennzeichnet, dass** der Streckenparameter Umgebungsparameter oder Betriebsparameter ausgewählt ist aus der Liste bestehend aus Höhenprofil der Strecke, Anteil der einzelnen Bewegungsphasen des Fahrspiels, erwartete Belastung durch Gewicht des Fahrzeugs, Umgebungsbedingungen, Umweltbedingungen, Fahrplaneinhaltung.

4. Elektrisches Antriebssystem (6) nach einem der Ansprüche 1 bis 3, **dadurch gekennzeichnet, dass** die von dem permanenterregten Motor (7c, 7d) im Volllastbetrieb gelieferte Leistung in einem Leistungsbereich liegt, der von 100% bis 150% bezüglich der Leistung liegt, die von dem weiteren Motor (7a, 7b) ausgewählt aus der Gruppe bestehend aus Asynchronmotor und Reluktanzmotor geliefert wird.

5. Elektrisches Antriebssystem (6) nach einem der Ansprüche 1 bis 3, **dadurch gekennzeichnet, dass** bei Volllast sämtliche Antriebsmotoren (7a, 7b, 7c, 7d) mit einer Unschärfe von 5%, bezogen auf den größten Wert, die gleiche Leistung bereitstellen.

6. Elektrisches Antriebssystem (6) nach einem der Ansprüche 1 bis 5, **dadurch gekennzeichnet, dass** der Inverter (8a, 8b) weitere Motoren (7a, 7b) bestehend aus Asynchronmotoren in Gruppeneinspeisung versorgt.

7. Elektrisches Antriebssystem (6) nach einem der Ansprüche 1 bis 6, **dadurch gekennzeichnet, dass** eine Leistungsaufteilung der permanenterregten Maschine (7c, 7d) und des weiteren Motors (7a, 7b) ausgewählt aus der Gruppe bestehend aus Asynchronmotor und Reluktanzmotor erfolgt anhand einer vorgegebenen Effizienzmatrix.

8. Elektrisches Antriebssystem (6) nach einem der Ansprüche 1 bis 7, **dadurch gekennzeichnet, dass** der permanenterregte Motor (7c, 7d) von einem Inverter (8c, 8d) versorgt wird, der ausgewählt ist aus einem SiC-Inverter, einem Diamant-Inverter und einem GaN-Inverter.

9. Antriebsstrang für ein Fahrzeug, insbesondere für ein Schienenfahrzeug, wobei der Antriebsstrang ein elektrisches Antriebssystem (6) zum Antreiben zumindest eines Rades oder einer Radsatzwelle umfasst, **dadurch gekennzeichnet, dass** das Antriebssystem (6) ausgestaltet ist nach einem der Ansprüche 1 bis 8.

10. Fahrzeug, **dadurch gekennzeichnet, dass** das Fahrzeug wenigstens eines von einem elektrischen Antriebssystem (6) nach einem der Ansprüche 1 bis 8 und einem Antriebsstrang nach Anspruch 9 aufweist.

11. Fahrzeug nach Anspruch 10, **dadurch gekennzeichnet, dass** das Fahrzeug ein Schienenfahrzeug ist.

12. Verfahren zum Betreiben eines elektrischen Antriebssystems (6) aufweisend eine Mehrzahl an Antriebsmotoren, wobei das Antriebssystem (6) wenigstens einen permanenterregten Motor (7c, 7d) und wenigstens einen weiteren Motor (7a, 7b) ausgewählt aus der Gruppe bestehend aus Asynchronmotor und Reluktanzmotor als Antriebsmotor umfasst, und wobei die Motoren jeweils von einem Inverter (8a, 8b) versorgt werden, **dadurch gekennzeichnet, dass** eine von dem permanenterregten Motor (7c, 7d) im Vollastbetrieb gelieferte Leistung in einem Leistungsbereich liegt, der von 100% bis 150% bezüglich der Leistung liegt, die von dem weiteren Motor (7a, 7b) ausgewählt aus der Gruppe bestehend aus Asynchronmotor und Reluktanzmotor geliefert wird.

13. Verfahren nach Anspruch 12, **dadurch gekennzeichnet, dass** der permanenterregte Motor (7c, 7d) von einem Inverter (8c, 8d) mit einem Leistungshalbleiter mit einem größeren Bandabstand als Silizium versorgt wird und der weitere Motor (7a, 7b) ausgewählt aus der Gruppe bestehend aus Asynchronmotor und Reluktanzmotor von einem Si-Inverter (8a, 8b) versorgt wird.
